# EUROPÄISCHE PATENTSCHRIFT

(11) **EP 0 855 342 B1**
(45) Veröffentlichungstag und Bekanntmachung des Hinweises auf die Patenterteilung: **29.08.2001**
(21) Anmeldenummer: 97123020.6
(22) Anmeldetag: 31.12.1997
(51) Int. Cl.: B65B 57/14, B65B 35/38, B65G 47/91

(54) **Vorrichtung zum Befüllen von Kartons mit Gegenständen**
Apparatus for filling cartons with articles
Dispositif pour remplir des boîtes en carton avec des articles

(30) Priorität: 28.01.1997 DE 19702885
(43) Veröffentlichungstag der Anmeldung: 29.07.1998
(73) Patentinhaber: Focke & Co. (GmbH & Co.), 27283 Verden (DE)
(72) Erfinder: Focke, Heinz, 27283 Verden (DE)
(74) Vertreter: Bolte, Erich, Dipl.-Ing.

(56) Entgegenhaltungen:
- DE-U- 29 602 243
- FR-A- 2 590 019
- US-A- 4 116 348
- US-A- 4 383 795

## Beschreibung

Die Erfindung betrifft eine Vorrichtung zum Handhaben von Gegenständen, wobei Behälter, wie Kartons, mit den Gegenständen befüllbar sind, eine Gegenstandsgruppe aus mehreren Gegenständen von einem Hubkopf eines Hubförderers erfassbar und bis zur Ablage in einem oben offenen Behälter, insbesondere Karton, transportierbar ist, der Hubkopf eine der Anzahl der Gegenstände der Gegenstandsgruppe entsprechende Anzahl von Halteorganen aufweist und an jedem Halteorgan ein Überwachungsorgan angeordnet ist, durch das das Vorhandensein der aufzunehmenden Gegenstände bzw. eine korrekt ausgebildete Gegenstandsgruppe feststellbar ist.

Eine Schwierigkeit bei der selbsttätigen Arbeitsweise der Handhabungsgeräte besteht darin, dass fehlerhafte Arbeitsschritte, nämlich das Fehlen einzelner Gegenstände vor allem beim Aufnehmen einer Gegenstandsgruppe, nicht unmittelbar festgestellt und hieraus demzufolge auch keine Maßnahmen abgeleitet werden können. Als Ergebnis ergibt sich ein Behälter bzw. Karton mit unkorrekter Füllung.

Bekannt ist eine gattungsgemässe Vorrichtung zum Handhaben von Gegenständen in Gestalt länglicher Beutel. Diese werden durch Greifer mit Klemmorganen erfasst und in Behälter eingeführt. Die Greifer sind an einem Hubkopf angebracht, der jeweils eine Gruppe von parallel gerichteten Beuteln erfasst. Mechanische Stößel dienen als Sensoren zur Prüfung der Vollständigkeit der aufzunehmenden Gruppe der Gegenstände. Fehlt mindestens ein Gegenstand dieser Gruppe, wird die Handhabungsbewegung gestoppt (US 4 383 795).

Der Erfindung liegt die Aufgabe zugrunde, eine Handhabungsvorrichtung der eingangs genannten Art dahingehend weiterzuentwickeln, dass beliebig geformte Gegenstände, insbesondere Kartons, zuverlässig erfassbar und gleichwohl das Fehlen einzelner Gegenstände einer zu erfassenden Gruppe erkannt wird.

Zur Lösung dieser Aufgabe ist die erfindungsgemäße Vorrichtung dadurch gekennzeichnet,
dass
a) die Halteorgane Saugorgane sind,
b) jedes Saugorgan über eine Saugleitung mit einer Sammelleitung verbunden ist und
c) jedes Überwachungsorgan ein auf pneumatische Strömungen und/oder Druckveränderungen reagierendes Schaltorgan ist, mit dem bei Veränderung der Strömung und/oder des Druckes infolge Fehlens wenigstens eines Gegenstandes ein Fehlersignal erzeugbar ist,
d) wobei aufgrund des Fehlersignals der Hubkopf durch den Hubförderer in eine Absetzstellung für fehlerhafte Gegenstandsgruppen bewegbar ist.

Bei der erfindungsgemäßen Vorrichtung wird demnach die Veränderung im pneumatischen System dazu genutzt, den Fehler zu erkennen und den Vorgang des Erfassens bzw. des Anhebens der (Rest-)Gruppe zu unterbrechen. Das dabei eingesetzte druckempfindliche Schaltorgan ist vorzugsweise ein Druckschalter.

Ein Beispiel einer erfindungsgemäßen Vorrichtung bzw. Einrichtung wird nachfolgend anhand der Zeichnungen näher erläutert. Es zeigt:

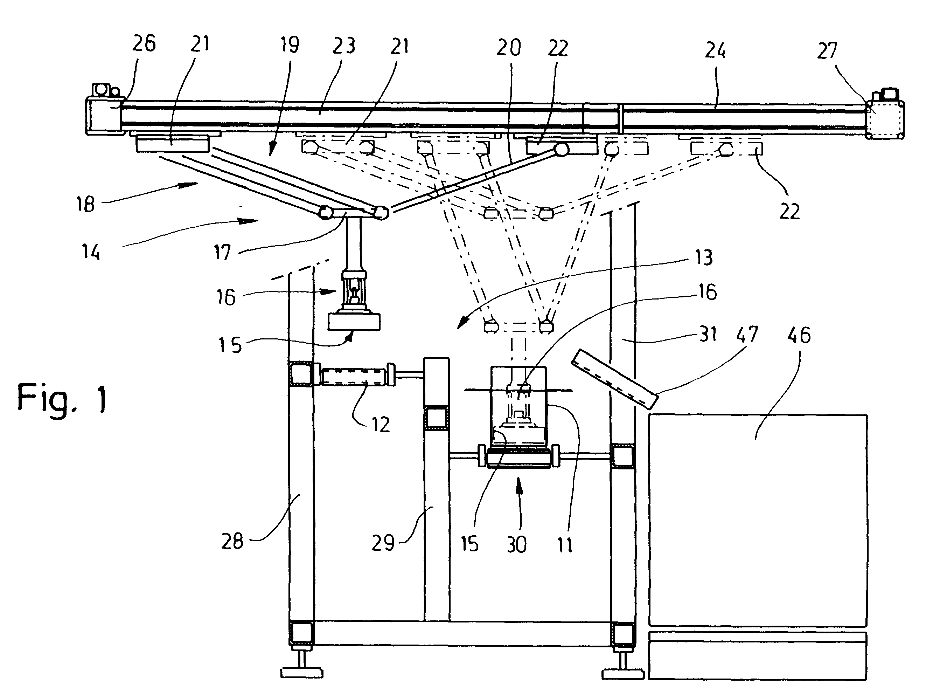

- Fig. 1: eine Einrichtung zum Handhaben von Gegenständen, nämlich zum Befüllen von Kartons, in Queransicht,

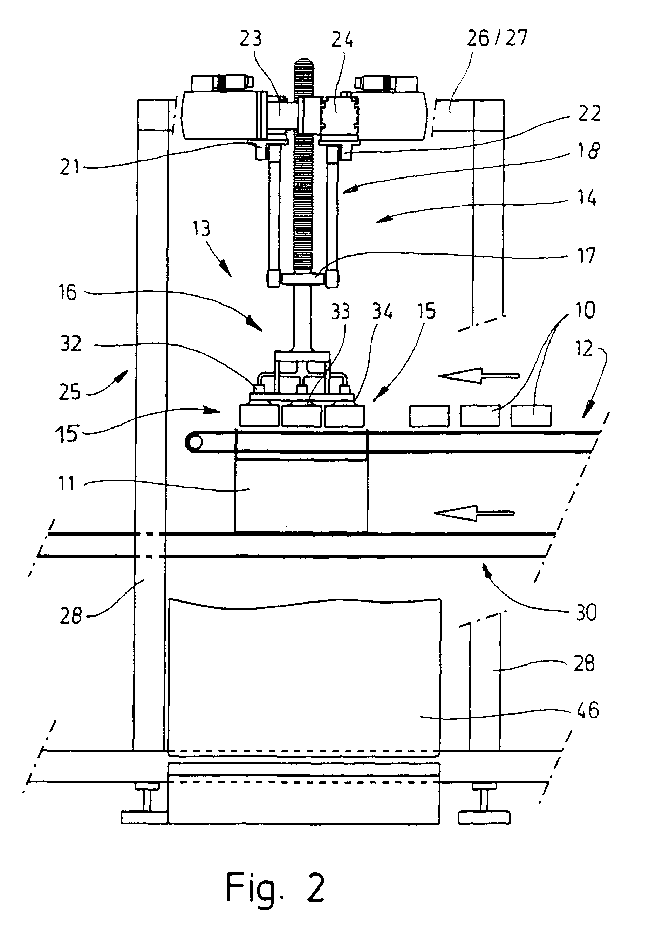

- Fig. 2: die Vorrichtung gemäß Fig. 1 in Längs- bzw. Seitenansicht,

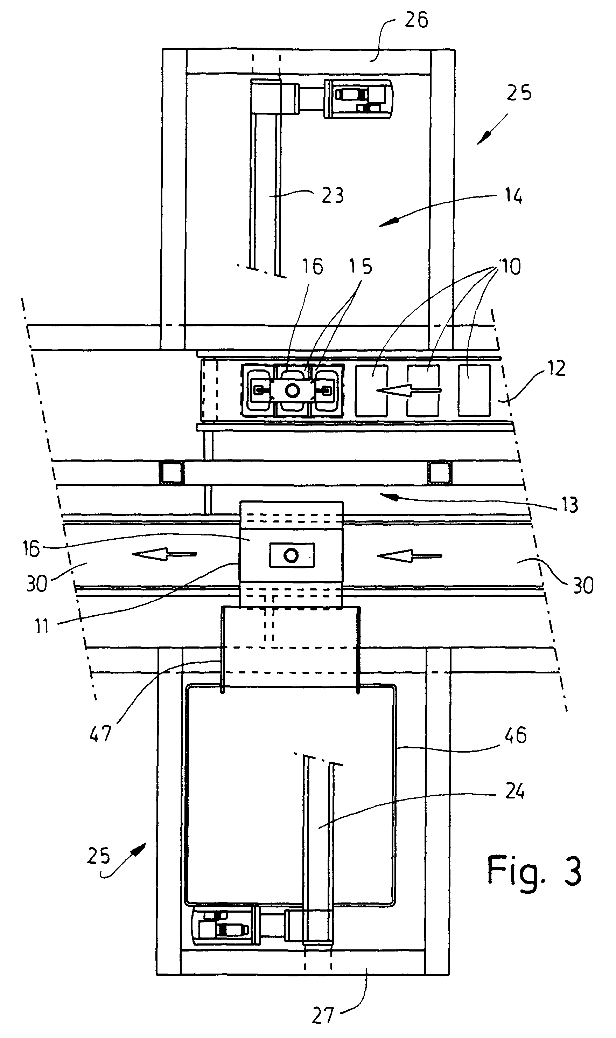

- Fig. 3: die Vorrichtung gemäß Fig. 1 und Fig. 2 in einer Grundrißdarstellung,
- Fig. 4: eine Darstellung analog zu Fig. 1 mit einer besonderen Position des Hubförderers,

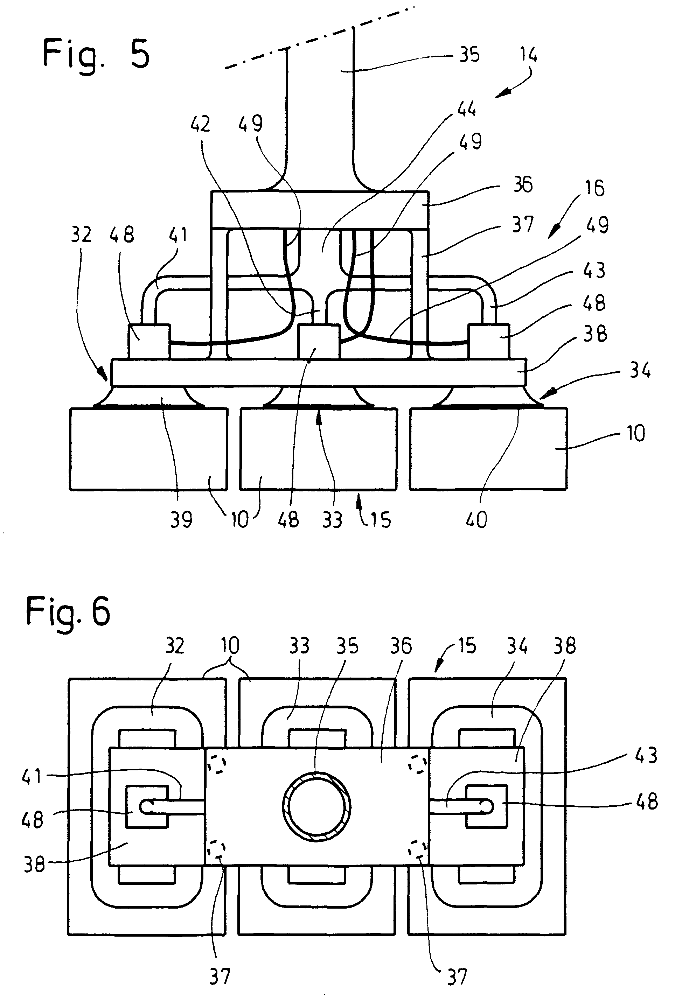

- Fig. 5: eine Einzelheit der Vorrichtung, nämlich einen Hubkopf in Seitenansicht, in vergrößertem Maßstab,
- Fig. 6: den Hubkopf gemäß Fig. 5 im Grundriß.

Die in den Zeichnungen dargestellte Einrichtung dient zum Einfüllen von Gegenständen 10 in einen Behälter, nämlich in einen Karton 11. Bei den Gegenständen 10 handelt es sich um einzelne Packungen oder um Packungsgebinde, zum Beispiel aus Taschentuchpackungen, Zigarettenpackungen oder dergleichen.

Die Gegenstände 10 werden auf einem Zuförderer 12, einem Bandförderer, einer Füllstation 13 zugeführt. Die Gegenstände 10 werden von einem Hubförderer 14 erfaßt, von dem Zuförderer 12 abgehoben, in Querrichtung zu diesem transportiert und in den oben offenen Karton 11 abgesenkt. Dort werden die Gegenstände 10 lagenweise abgelegt. Bei dem vorliegenden Ausführungsbeispiel werden jeweils mehrere Gegenstände 10, also Gegenstandsgruppen 15 durch den Hubförderer 14 transportiert. Jede Gegenstandsgruppe 15 besteht hier aus drei in Förderrichtung des Zuförderers 12 nebeneinanderliegenden Gegenständen 10.

Der Hubförderer 14 ist als selbsttätig arbeitender Linearförderer ausgebildet. Ein Hubkopf 16 ist an einem Tragoran, nämlich einer Tragplatte 17 eines Betätigungsgestänges 18 angebracht. Dieses wiederum besteht aus einem schräg angeordneten Parallelogrammgestänge 19 einerseits und einem ebenfalls schräg, jedoch entgegengesetzt gerichteten Führungslenker 20. Das Parallelogrammgestänge 19 und der Führungslenker 20 sind jeweils gelenkig mit der Tragplatte 17 verbunden. Die von diesem entfernt liegenden (oberen) Enden sind gelenkig jeweils mit einem Schlitten 21 bzw. 22 verbunden. Diese sind in horizontaler Ebene bzw. entlang horizontaler Tragschienen 23, 24 in beiden Richtungen verfahrbar, und zwar unabhängig voneinander. Durch entsprechende Bewegung der Schlitten 21, 22 an den zugeordneten Tragschienen 23, 24 können sowohl Aufwärtsbewegungen des Hubkopfes 16 als auch eine Bewegung in Querrichtung zum Zuförderer 12 durchgeführt werden. Der Hubförderer 14 ist demnach mit Lineartrieben ausgestattet, die die erforderlichen Bewegungen des Hubkopfes 16 in einer aufrechten Querebene ermöglichen. Aufgrund des Gelenkgetriebes wird dabei die Tragplatte 17 mit dem Hubkopf 16 ausschließlich translatorisch bewegt, also lediglich im Sinne einer Auf- und Ab- sowie einer Querbewegung.

Der Hubförderer 14 ist Teil eines rahmenartigen Traggestells 25 im Bereich der Füllstation 13. Die Tragschienen 23, 24 sind an oberen Querholmen 26, 27 des Traggestells 25 angebracht. Der Zuförderer 12 führt in den Bereich des Traggestells 25. Der Zuförderer 12 ist zwischen aufrechten Stützen 28, 29 gelagert.

Versetzt neben dem Zuförderer 12 befindet sich ein Kartonförderer 30, der parallel zum Zuförderer 12 verläuft, jedoch in einer tieferen Ebene. Der Kartonförderer 30 ist ebenfalls ein Bandförderer, auf dessen Obertrum ein Behälter, nämlich der Karton 11 in der Füllstation 13 positioniert ist. Die Relativstellung des Kartons 11 ist exakt auf die quergerichtete Bewegungsebene des Hubkopfes 16 ausgerichtet. Nach dem Füllen des Kartons 11 wird dieser durch Kartonförderer 30 aus der Füllstation 13 abtransportiert. Der Kartonförderer 30 ist zwischen der Stütze 29 einerseits und einer weiteren Stütze 31 andererseits gelagert.

Der Karton 11 wird lagenweise gefüllt. Eine Lage besteht aus mehreren nebeneinanderliegenden Gegenständen 10, insbesondere aus der Gegenstandsgruppe 15.

Der Hubkopf 16 weist zum Erfassen einer Gegenstandsgruppe 15 eine der Anzahl der Gegenstände 10 der Gegenstandsgruppe 15 entsprechende Anzahl von Halteorganen auf. Bei dem vorliegenden Beispiel ist der Hubkopf 16 als Saugkopf ausgebildet mit mehreren, nämlich drei Saugorganen 32, 33, 34. Jedes dieser Saugorgane 32..34 erfaßt einen Gegenstand 10 an der Oberseite durch Ansaugen, also durch Unterdruck.

Der Hubkopf 16 ist über ein aufrechtes Rohr 35 mit dem Hubförderer 14, nämlich der Tragplatte 17 verbunden. Das Rohr 35 ist mit einer Unterdruckquelle verbunden. Zugleich können in dem Rohr 35 elektrische Leitungen verlaufen.

Das Rohr 35 ist am unteren Ende mit einer quergerichteten Verteilerplatte 36 verbunden. Diese wiederum hält über Tragstangen 37 einen plattenförmigen Tragsteg 38. An der Unterseite desselben sind die Saugorgane 32, 33, 34 angeordnet. Diese bestehen aus einem trompetenartig geformten, nach unten offenen Gehäuse 39. An dessen unteren, annähernd rechteckigen Rand - mit abgerundeten Ecken - verläuft ringsherum ein Dichtrand 40 aus elastischem Werkstoff, wie Gummi.

An jedes Saugorgan 32..34 schließt eine Saugleitung 41, 42, 43 an. Die (drei) Saugleitungen 41..43 laufen in einer mittigen Sammelleitung 44 zusammen, die ihrerseits mit dem Rohr 35 verbunden ist und so den Anschluß an die gemeinsame Unterdruckquelle gewährleistet.

Eine weitere Besonderheit der Vorrichtung besteht darin, daß der korrekte Ablauf der Vorgänge beim Handhaben der Gegenstände 10 überwacht wird. Es geht darum, daß keine Leerbewegungen des Hubkopfes 16 oder Transportbewegungen ausgeführt werden, wenn nicht eine komplette Gegenstandsgruppe 15 vom Hubkopf 16 aufgenommen worden ist. Wenn also lediglich eine Teilgruppe 45 aus einem Gegenstand 10 oder zwei Gegenständen 10 vom Hubkopf 16 erfaßt worden ist, wird ein Fehlersignal erzeugt. Der übliche, beschriebene Fördertakt wird abgebrochen oder umgestaltet. Bei dem vorliegenden Ausführungsbeispiel wird der Hubkopf 16 mit der identifizierten Teilgruppe 45 in eine andere Position bewegt. Dort wird die komplette Teilgruppe 45 abgelegt, so daß es nicht zu einer Fehlfüllung des Kartons 11 kommen kann.

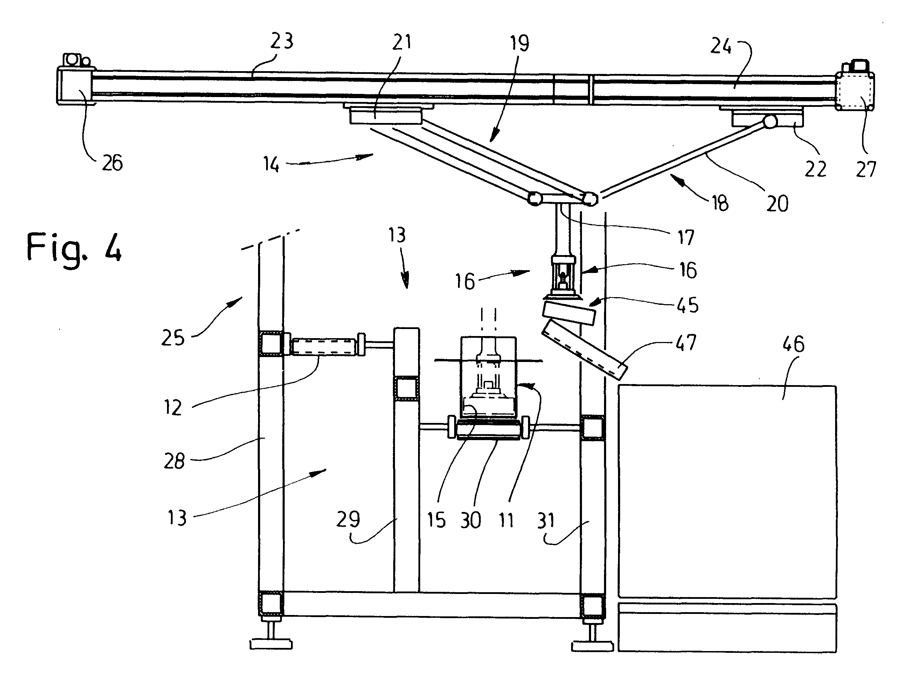

Wie aus Fig. 4 ersichtlich, wird bei einer fehlerhaften Gegenstandsgruppe 15 der Hubkopf 16 über den Karton 11 hinaus bewegt. Seitlich neben dem Kartonförderer 30 wird die fehlerhafte Gegenstandsgruppe 15 bzw. die Teilgruppe 45 abgelegt. Bei dem vorliegenden Ausführungsbeispiel werden die Gegenstände 10 dieser Teilgruppe 45 von einem Sammelbehälter 46 aufgenommen. In diesen gelangen die Gegenstände 10 durch ein Führungsorgan, nämlich durch eine Rutsche 47. Auf dieser wird die Teilgruppe 45 von dem Hubkopf 16 abgelegt.

Die Überwachung des Hubkopfes 16 hinsichtlich korrekter und vollständiger Aufnahme einer Gegenstandsgruppe 15 erfolgt hier unter Einsatz des Unterdrucks. Jedem Saugorgan 32, 33, 34 ist ein Druckschalter 48 zugeordnet. Dieser reagiert auf Druckveränderungen, im vorliegenden Falle auf Unterdruck. Wenn im Bereich eines Saugorgans 32..34 ein Gegenstand 10 fehlt, wird durch die sich daraus ergebenden Druckverhältnisse der Druckschalter 48 in der Saugleitung 41, 42, 43 betätigt. Jeder Druckschalter 48 ist über elektrische Leitungen 49 mit einer Steuereinheit (nicht gezeigt) verbunden. Über die Betätigung des Druckschalters 48 wird demnach der Fehler erkannt und führt über die Steuerung zu der beschriebenen veränderten Bewegung des Hubkopfes 16.

Diese Überwachung der korrekten Besetzung des Hubkopfes 16 kann in analoger Weise auch bei mechanischen Halteorganen für die Gegenstände 10 eingesetzt werden. Insbesondere sind optoelektronische Sensoren oder mechanische Schaltorgane als Überwachungsorgane einsetzbar.

### Bezugszeichenliste:

- 10: Gegenstand
- 11: Karton
- 12: Zuförderer
- 13: Füllstation
- 14: Hubförderer
- 15: Gegenstandsgruppe
- 16: Hubkopf
- 17: Tragplatte
- 18: Betätigungsgestänge
- 19: Parallelogrammgestänge
- 20: Führungslenker
- 21: Schlitten
- 22: Schlitten
- 23: Tragschiene
- 24: Tragschiene
- 25: Traggestell
- 26: Querholm
- 27: Querholm
- 28: Stütze
- 29: Stütze
- 30: Kartonförderer
- 31: Stütze
- 32: Saugorgan
- 33: Saugorgan
- 34: Saugorgan
- 35: Rohr
- 36: Verteilerplatte
- 37: Tragstange
- 38: Tragsteg
- 39: Gehäuse
- 40: Dichtrand
- 41: Saugleitung
- 42: Saugleitung
- 43: Saugleitung
- 44: Sammelleitung
- 45: Teilgruppe
- 46: Sammelbehälter
- 47: Rutsche
- 48: Druckschalter
- 49: Leitung

## Patentansprüche

1. Vorrichtung zum Handhaben von Gegenständen (10), wobei Behälter, wie Kartons (11), mit den Gegenständen (10) befüllbar sind, eine Gegenstandsgruppe (15) aus mehreren Gegenständen (10) von einem Hubkopf (16) eines Hubförderers (14) erfassbar und bis zur Ablage in einem oben offenen Behälter, insbesondere Karton (11), transportierbar ist, der Hubkopf (16) eine der Anzahl der Gegenstände (10) der Gegenstandsgruppe (15) entsprechende Anzahl von Halteorganen aufweist und an jedem Halteorgan ein Überwachungsorgan angeordnet ist, durch das das Vorhandensein der aufzunehmenden Gegenstände (10) bzw. eine korrekt ausgebildete Gegenstandsgruppe (15) feststellbar ist, **dadurch gekennzeichnet,** dass
a) die Halteorgane Saugorgane (32, 33, 34) sind,
b) jedes Saugorgan (32, 33, 34) über eine Saugleitung (41, 42, 43) mit einer Sammelleitung (44) verbunden ist und
c) jedes Überwachungsorgan ein auf pneumatische Strömungen und/oder Druckveränderungen reagierendes Schaltorgan (48) ist, mit dem bei Veränderung der Strömung und/oder des Druckes infolge Fehlens wenigstens eines Gegenstandes (10) ein Fehlersignal erzeugbar ist,
d) wobei aufgrund des Fehlersignals der Hubkopf (16) durch den Hubförderer (14) in eine Absetzstellung für fehlerhafte Gegenstandsgruppen (15) bewegbar ist.

2. Vorrichtung nach Anspruch 1, **dadurch gekennzeichnet,** dass das in jeder Saugleitung (41, 42, 43) angeordnete auf pneumatische Strömungen und/oder Druckveränderungen reagierende Schaltorgan ein Druckschalter (48) ist.

3. Vorrichtung nach Anspruch 1 oder 2, **dadurch gekennzeichnet,** dass der Hubkopf (16) mit einer fehlerhaften Gegenstandsgruppe (15), insbesondere einer Teilgruppe (45), in den Bereich eines Sammelbehälters (46) für die Gegenstände (10) bewegbar ist, insbesondere in den Bereich einer zum Sammelbehälter (46) führenden Rutsche (47), wobei die fehlerhafte Gegenstandsgruppe (15) auf der Rutsche (47) bzw. im Sammelbehälter (46) absetzbar ist.

4. Vorrichtung nach einem der vorherigen Ansprüche, **dadurch gekennzeichnet,** dass die Gegenstände (10) auf einem Zuförderer (12) in dem Bereich des Hubförderers (14), nämlich einer Füllstation (13), bewegbar sind und dass ein Kartonförderer (30) zum Abtransport von gefüllten Behältern parallel zum Zuförderer (12) positioniert ist, vorzugsweise in einer etwa um die Höhe des Kartons (11) tiefer liegenden Ebene zum Zuförderer (12).

5. Vorrichtung nach einem der vorherigen Ansprüche, **dadurch gekennzeichnet,** dass der Hubkopf (16) durch Hubförderer (14) ausschließlich in einer aufrechten Ebene quer zum Zuförderer (12) bewegbar ist und dass bei festgestellter fehlerhafter Gegenstandsgruppe (15) der Hubkopf (16) über die Absetzposition hinweg bewegbar ist in den Bereich des Sammelbehälters (46).

## Claims

1. Apparatus for the handling of articles (10), containers, such as cartons (11), being capable of being filled with the articles (10), an article group (15) which consists of a plurality of articles (10) being capable of being grasped by a lifting head (16) of a lifting conveyor (14) and it being transported until depositing in an upwardly open container, in particular carton (11), the lifting head (16) having a number of holding members which corresponds to the number of articles (10) of the article group (15), and there being arranged on each holding member a monitoring member, by means of which the presence of the articles (10) to be received or a correctly formed article group (15) can be detected, **characterized in that**
a) the holding members are suction members (32, 33, 34),
b) each suction member (32, 33, 34) is connected via a suction line (41, 42, 43) to a collecting line (44), and
c) each monitoring member is a switching member (48) which reacts to pneumatic flows and/or pressure changes and by means of which a fault signal can be generated in the event of a change in the flow and/or in the pressure as a result of the absence of at least one article (10),
d) as a result of the fault signal the lifting head (16) being capable of being moved by the lifting conveyor (14) into a setting-down position for faulty article groups (15).

2. Apparatus according to Claim 1, **characterized in that** the switching member arranged in each suction line (41, 42, 43) and reacting to pneumatic flows and/or pressure changes is a pressure switch (48).

3. Apparatus according to Claim 1 or 2, **characterized in that** the lifting head (16), together with a faulty article group (15), in particular a subgroup (45), is capable of being moved into the region of a collecting container (46) for the articles (10), in particular into the region of a chute (47) leading to the collecting container (46), the faulty article group (15) being capable of being set down on the chute (47) or in the collecting container (46).

4. Apparatus according to one of the preceding claims, **characterized in that** the articles (10) are capable of being moved on a feed conveyor (12) in the region of the lifting conveyor (14), to be precise a filling station (13), and in that a carton conveyor (30) for transporting away filled containers is positioned parallel to the feed conveyor (12), preferably in a plane lower than that of the feed conveyor (12) by about the height of the carton (11).

5. Apparatus according to one of the preceding claims, **characterized in that** the lifting head (16) is capable of being moved by the lifting conveyor (14) solely in a vertical plane transversely to the feed conveyor (12), and in that, when a faulty article group (15) is detected, the lifting head (16) is capable of being moved over and beyond the setting-down position into the region of the collecting container (46).

## Revendications

1. Dispositif de manipulation d'objets (10) dans lequel des récipients, tels que cartons (11), peuvent être remplis avec les objets (10), un groupe d'objets (15) constitué de plusieurs objets (10) peut être saisi par une tête élévatrice (16) d'un transporteur élévateur (14) et transporté pour être déposé dans un récipient, en particulier un carton (11), ouvert en haut, la tête élévatrice (16) présente un nombre d'organes de maintien correspondant au nombre d'objets (10) du groupe d'objets (15), et sur chaque organe de maintien est placé un organe de contrôle qui peut détecter la présence des objets (10) à recevoir ou un groupe d'objets (15) correctement formé, caractérisé par le fait que
a) les organes de maintien sont des organes d'aspiration (32, 33, 34),
b) chaque organe d'aspiration (32, 33, 34) est relié par une conduite d'aspiration (41, 42, 43) à une conduite collectrice (44) et
c) chaque organe de contrôle est un organe de commutation (48) qui réagit à des écoulements et/ou des variations de pression pneumatiques et avec lequel, en cas de variation de l'écoulement et/ou de la pression en raison de l'absence d'au moins un objet (10), peut être produit un signal de défaut,
d) et en raison du signal de défaut, le transporteur élévateur (14) peut amener la tête élévatrice (16) dans une position de dépôt des groupes d'objets (15) défectueux.

2. Dispositif selon la revendication 1, caractérisé par le fait que l'organe de commutation placé dans chaque conduite d'aspiration (41, 42, 43) et réagissant à des écoulements et/ou des variations de pression pneumatiques est un manostat (48).

3. Dispositif selon l'une des revendications 1 et 2, caractérisé par le fait que la tête élévatrice (16) peut être amenée avec un groupe d'objets (15) défectueux, en particulier un groupe partiel (45), dans la zone d'un récipient collecteur (46) pour les objets (10), en particulier dans la zone d'une goulotte (47) menant au récipient collecteur (46), le groupe d'objets (15) défectueux pouvant être déposé sur la goulotte (47) ou dans le récipient collecteur (46).

4. Dispositif selon l'une des revendications précédentes, caractérisé par le fait que les objets (10) peuvent être mus sur un transporteur d'amenée (12) dans la zone du transporteur élévateur (14), à savoir d'un poste de remplissage (13), et qu'un transporteur de cartons (30) pour l'évacuation des récipients remplis est placé parallèlement au transporteur d'amenée (12), de préférence dans un plan situé plus bas environ de la hauteur du carton (11) par rapport au transporteur d'amenée (12).

5. Dispositif selon l'une des revendications précédentes, caractérisé par le fait que la tête élévatrice (16) peut être mue par le transporteur élévateur (14) exclusivement dans un plan vertical perpendiculaire au transporteur d'amenée (12), et qu'en cas de détection de groupe d'objets (15) défectueux, la tête élévatrice (16) peut être amenée, au delà de la position de dépôt, dans la zone du récipient collecteur (46).
